# EUROPÄISCHE PATENTSCHRIFT

(11) **EP 2 697 341 B1**
(45) Veröffentlichungstag und Bekanntmachung des Hinweises auf die Patenterteilung: **14.11.2018**
(21) Anmeldenummer: 12714679.3
(22) Anmeldetag: 11.04.2012
(51) Int. Cl.: C10L 9/08, C01B 32/05

(54) **VERFAHREN ZUR DURCHFÜHRUNG EINER HYDROTHERMALEN KARBONISIERUNGSREAKTION UND REAKTIONSTANK HIERFÜR**
METHOD FOR CARRYING OUT A HYDROTHERMAL CARBONISATION REACTION AND REACTION TANK THEREFOR
PROCÉDÉ DE MISE EN UVRE D'UNE RÉACTION DE CARBONISATION HYDROTHERMALE ET RÉSERVOIR DE RÉACTION À CET EFFET

(30) Priorität: 11.04.2011 DE 102011001954
(43) Veröffentlichungstag der Anmeldung: 19.02.2014
(73) Patentinhaber: AVALON Industries AG, 6304 Zug (CH)
(72) Erfinder: ACHERMANN, Peter, CH-6304 Zug (CH); VYSKOCIL, Jan, CH-6304 Zug (CH)
(74) Vertreter: Geitz Truckenmüller Lucht Christ
(86) Internationale Anmeldenummer: PCT/EP2012/056550
(87) Internationale Veröffentlichungsnummer: WO 2012/140060

(56) Entgegenhaltungen:
- EP-A1- 2 681 296
- WO-A1-2010/092040
- US-A- 2 890 929
- US-A- 4 340 566
- US-A- 4 435 364
- US-A1- 2009 064 580

## Beschreibung

Die vorliegende Erfindung betrifft ein Verfahren zur Durchführung einer hydrothermalen Karbonisierungsreaktion, bei welchem einem Reaktionsraum Biomasse zugeführt und durch Einblasen von Dampf die für den Ablauf einer hydrothermalen Karbonisierungsreaktion erforderlichen Reaktionsbedingungen hinsichtlich Druck und Temperatur geschaffen werden, sowie einen Reaktionstank zur Durchführung dieses Verfahrens.
Ein derartiges Verfahren und eine Vorrichtung zur Durchführung desselben ist bereits aus der deutschen Offenlegungsschrift DE 10 2007 022 840 A1 vorbekannt. Dieses Verfahren sieht vor, dass in einer Reaktionskette zunächst ein Vorbehandlungsschritt durchgeführt wird, wonach die vorbehandelte Biomasse, welche hierbei vorgeheizt wird, in einen Reaktionsraum verbracht wird. Während des Transports der Biomasse aus dem Vorheizbehälter in den Reaktionsraum mithilfe einer Förderpumpe wird hierbei eine Druckerhöhung durchgeführt. Die in dem Reaktionsraum angekommene Biomasse wird sodann einer weiteren Druckerhöhung unterzogen, sowie mit Dampf, insbesondere Wasserdampf, beaufschlagt, um die Reaktionsbedingungen für eine hydrothermale Karbonisierung zu schaffen. WO 2010/092040 A1 offenbart ein weiteres Verfahren zur hydrothermalen Karbonisierung. Die wesentlichen Prozessparameter, welche zum Ablaufen der hydrothermalen Karbonisierungsreaktion erforderlich sind, sind ein ausreichender Druck in der Größenordnung von ca. 25 bar und eine Temperatur von oberhalb 180°C, vorzugsweise zwischen 210 und 230°C. Es besteht hierbei jedoch das Problem, dass die in den Reaktionsraum eingeförderte Biomasse eine gewisse Wärmekapazität aufweist und daher zunächst die äußeren, erst deutlich verzögert dann die inneren Bereiche der zugeführten Biomasse die erforderlichen Reaktionsparameter erreichen, so dass die Karbonisierungsreaktion zunächst außen und deutlich verzögert erst innen stattfindet.

Um dies zu umgehen, ist es bekannt, quirlartige Mischvorrichtungen innerhalb des Reaktionsraums vorzusehen, um eine gleichmäßige Verteilung der Temperatur bzw. des Drucks in der Biomasse zu erreichen. Dieses Vorgehen beschleunigt allerdings die Karbonisierungsreaktion bzw. das vollständige Durchreagieren der Biomasse nur in einem sehr geringen Umfang.

Um den Durchsatz eines Reaktors zu erhöhen und damit die zur Aufrechterhaltung des Drucks und der Temperatur erforderliche Energie besser ausnutzen zu können, stellt sich die vorliegende Erfindung die Aufgabe, das Verfahren zur Durchführung einer hydrothermalen Karbonisierungsreaktion weiter zu verbessern.

Dies gelingt durch ein Verfahren zur Durchführung einer hydrothermalen Karbonisierungsreaktion gemäß den Merkmalen des Hauptanspruchs sowie durch einen Reaktionstank einer Anlage zur hydrothermalen Karbonisierung von Biomasse gemäß den Merkmalen des nebengeordneten Anspruchs 10. Weitere, sinnvolle Ausgestaltungen des Verfahrens und des Reaktionstanks können den jeweiligen Unteransprüchen entnommen werden.

Die grundsätzliche der Erfindung zu Grunde liegende Idee besteht darin, die Biomasse in dem Reaktionsraum möglichst gleichmäßig und möglichst fein zu verteilen, so dass die hydrothermale Karbonisierungsreaktion zum einen möglichst zeitgleich in der gesamten Biomasse abläuft und damit die Gesamtdauer der Behandlung eines Batches möglichst weit gesenkt wird, und andererseits die Karbonisierungsreaktion möglichst vollständig in der gesamten Biomasse abläuft, um den Ertrag möglichst weitgehend zu erhöhen.

Hierzu wird damit gearbeitet, dass zeitgleich der benötigte Dampf mit der Biomasse in den Reaktionsraum eingebracht wird. Die Biomasse wird hierbei mit dem Dampfstrahl in Kontakt gebracht, so dass aufgrund der kinetischen Energie des Dampfstrahls eine Verwirbelung der Biomasse in dem Reaktionsraum eintritt, welche aufgrund der ebenfalls vorhandenen Wärmeenergie des Dampfstrahls auch zu einer Erhitzung der Biomasse auf die erforderliche Temperatur führt. Gleichzeitig oder auch unabhängig hiervon kann eine Druckerhöhung in dem Reaktionsraum stattfinden, um so die erforderlichen Umgebungsparameter für das Ablaufen der hydrothermalen Karbonisierungsreaktion zu schaffen. Indem der Dampfstrahl auf die Biomasse direkt gerichtet und diese in dem Reaktionsraum verwirbelt wird erfolgt zum einen eine gleichmäßige Verteilung der Biomasse in dem Reaktionsraum, und zum anderen eine weitere Zerkleinerung der Biomasse, so dass die Oberfläche der zu karbonisierenden Biomasse deutlich vergrößert wird. Damit wächst auch die Angriffsfläche für Druck und Temperatur, so dass die Karbonisierungsreaktion weitgehend zeitgleich in der gesamten Biomasse ablaufen kann.

Im Einzelnen kann hierzu ein Reaktionstank verwendet werden, welcher verschiedene Arten von Einblasdüsen zum Einblasen des Dampfes aufweist. Eine erste Sorte von Einblasdüsen sind tangential zu einer lotrecht stehenden Längsachse des Reaktionsraums aufgestellt, so dass diese eine kreisförmige Verwirbelung der Biomasse innerhalb des Reaktionsraums bewirken. Diese tangentialen Einblasdüsen können beispielsweise in einer Ebene angeordnet sein und in vier verschiedene Windrichtungen zeigen. Hierbei ist die Einblasrichtung windschief gegenüber der genannten Längsachse des Reaktionsraums, so dass der aus den Einblasdüsen eingebrachte Dampf die Längsachse praktisch umkreist.

Ergänzend sind auch vertikale Einblasdüsen vorgesehen sein, deren Einblasrichtung parallel zu der genannten Längsachse des Reaktionsraums verläuft, wodurch ein Aufwirbeln der Biomasse gegen die Schwerkraft bewirkt wird. Je nach gewünschtem Reaktionsverlauf können entweder die tangentialen oder die vertikalen Einblasdüsen verwendet werden, auch eine Kombination oder ein zeitliches Abwechseln bzw. späteres Zu- und Abschalten einzelner Düsen ist je nach gewünschtem Ablauf der Reaktion möglich.
Insbesondere wird als besonders vorteilhaft angesehen, wenn zunächst mithilfe der tangentialen Einblasdüsen eine Verwirbelung der Biomasse in dem Reaktionsraum erfolgt, und nach Einsetzen der Karbonisierungsreaktion dann die vertikalen Einblasdüsen zugeschaltet werden. Dies hat den Hintergrund, dass nach dem Einsetzen der Karbonisierungsreaktion die leichteren, karbonisierten Teilchen sich eher in der Verwirbelungsmitte aufhalten werden. Dementsprechend ist es vorgesehen, die vertikalen Einblasdüsen so anzuordnen, dass sie hauptsächlich den Mittelteil der Verwirbelung anblasen und somit die bereits karbonisierten, leichteren Teilchen weiter in den Reaktionsraum hinein verbringen. Insbesondere bietet es sich hierzu an, dass der Reaktionsraum ein langgestreckter Zylinder ist, welcher im Bodenbereich die Einblasdüsen aufweist. Ergänzend kann ein unterer Abschnitt des Reaktionsraums im Bereich der Einblasdüsen trichterförmig zulaufend sein, um die gezielte Rückführung der außerhalb der Wirbel wieder herabregnenden Biomasse zu den Einblasdüsen zu gewährleisten.
Um eine genügende kinetische Energie auf die Biomasse wirken zu lassen, ist es zudem vorgesehen, dass der Dampf mit einer besonders hohen Geschwindigkeit, vorzugsweise Überschallgeschwindigkeit, also ca. 350 m/s, in den Reaktionsraum eingeblasen wird. Durch diese enorme kinetische Energie erfolgt zum einen eine besonders gleichmäßige Verteilung der Biomasse in dem Reaktionsraum und andererseits auch ein weiteres Aufbrechen der Strukturen der Biomasse, was zu einer feineren Korngröße und damit zu einem schnelleren Ablauf der Reaktion führt.
Eine Beschleunigung der Reaktion kann zudem dadurch erreicht werden, dass ein Vorheizen der Biomasse vor dem Einbringen in den Reaktionsraum durchgeführt wird, wobei die Vorheizung der Biomasse idealerweise in der Größenordnung von 140°C vorgenommen wird.
Der gesamte erfindungsgemäße Prozess wie vorstehend beschrieben kann beispielsweise über eine Prozesssteuerung beeinflusst werden, indem entweder vorab eine auf die verwendete Biomasse angepasste Programmierung geladen oder während des Prozesses durchgeführt wird. Die wesentlichen Einstellparameter hierfür sind die Vorheiztemperatur der Biomasse, die Einblasgeschwindigkeit des Dampfes sowie die zeitliche und räumliche Verteilung des Dampfes auf die verschiedenen Einblasdüsen, welche wesentlichen Einfluss auf die Verteilung der Biomasse in dem Reaktionsraum haben. Hierdurch ist es möglich, innerhalb des Reaktionsraums verschiedene Temperatur- und Energiezonen einzustellen, so dass nicht lediglich die üblicherweise bei dem Prozess zu gewinnende Kohle entsteht, sondern auch ein Betrieb beispielsweise als "Bio-Reaktor" möglich ist, in welchem neben der Kohle noch andere Produkte wie beispielsweise Furfurale, insbesondere Hydroxymethylfurfural (HMF) entstehen.

Hierzu kann der Reaktionsraum in mehrere Teile unterteilt sein, nämlich insbesondere einen Verwirbelungsbereich und einen Reaktionsbereich, wobei zunächst die Verwirbelung in dem Verwirbelungsbereich stattfindet und dann nach Einsetzen der vertikalen Einblasdüsen die Biomasse in den Reaktionsbereich verbracht wird, wo der hauptsächliche Teil der Karbonisierungsreaktion abläuft. Aufgrund dieses vorbeschriebenen Systems besteht die Möglichkeit, zwei oder mehrere verschiedene energetische Potenziale in einem Reaktionsraum zu erhalten und gleichzeitig eine möglichst weitgehende, gleichmäßige Durchmischung zu gewährleisten.

Die vorstehend beschriebene Erfindung wird im Folgenden anhand eines Ausführungsbeispiels näher erläutert.

Es zeigen
- Figur 1: eine Anlage zur Durchführung einer hydrothermalen Karbonisierungsreaktion in einer schematischen, perspektivischen Ansicht von schräg oben,
- Figur 2: ein Reaktionstank mit tangentialen und vertikalen Einblasdüsen bei Betrieb lediglich der tangentialen Einblasdüsen in einer seitlichen Schnittdarstellung,
- Figur 3: der Reaktionstank gemäß Figur 2 bei Betrieb lediglich der vertikalen Einblasdüsen in einer seitlichen Schnittdarstellung,
- Figur 4: der Reaktionstank gemäß Figur 2 bei Betrieb sowohl der tangentialen als auch der vertikalen Einblasdüsen in einer seitlichen Schnittdarstellung,
- Figur 5: eine Dampfzuführung mit tangentialen und vertikalen Einblasdüsen in einer Draufsicht von oben, sowie
- Figur 6: die Dampfzuführung gemäß Figur 5 in einer perspektivischen Schnittdarstellung von schräg oben.

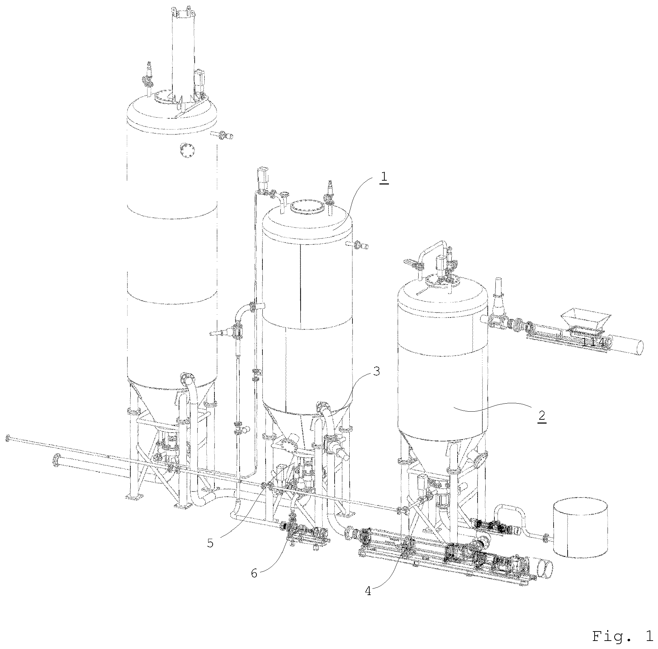

Figur 1 zeigt eine Anlage zur Durchführung einer hydrothermalen Karbonisierung, welche einen Reaktionstank 1 umfasst, in welchem die eigentliche Karbonisierungsreaktion abläuft. Diesem Reaktionstank 1 wird über eine Biomassenzuführung 3 aus einem Vorheiztank 2 vorgeheizte Biomasse mit einer Temperatur von ca. 140°C zugeführt. Dies erfolgt über eine Biomassenpumpe 4. Gleichzeitig wird mithilfe einer Dampfpumpe 6 heißer Wasserdampf einer Dampfzuführung 5 des Reaktionstanks 1 zur Verfügung gestellt, so dass die Biomasse und der Dampf gleichzeitig in den Reaktionstank 1 eingebracht werden können. In dem Reaktionstank 1 werden hierdurch die Reaktionsbedingungen für den Ablauf der hydrothermalen Karbonisierung geschaffen, welche im Wesentlichen aus einem geeigneten Druck in Höhe von ca. 25 bar und einer geeigneten Temperatur in Höhe von ca. 210 bis 230°C bestehen.

Um sicherzustellen, dass die Biomasse möglichst gleichmäßig der hydrothermalen Karbonisierungsreaktion unterworfen wird, erfolgt eine Verteilung der Biomasse innerhalb des Reaktionstanks 1. Hierzu weist der Reaktionstank 1, welcher im Wesentlichen zylindrisch geformt ist und eine trichterförmige Ausbildung im Bodenbereich aufweist, welche in der Dampfzuführung 5 mündet, im Bereich dieser Dampfzuführung 5 vertikale Einblasdüsen 9 und tangentiale Einblasdüsen 10 auf.

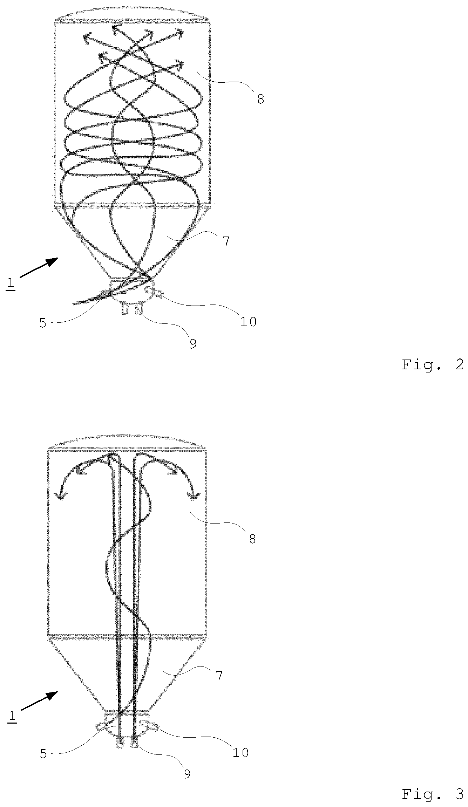

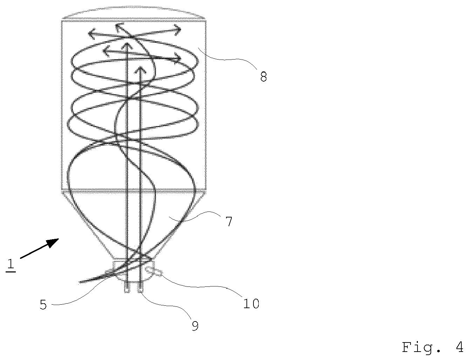

In Figur 2 ist zunächst gezeigt, wie eine Verwirbelung der Biomasse durch den über die tangentialen Einblasdüsen 10 eingeblasenen Dampf erfolgt. Im Wesentlichen wird aufgrund dieser tangentialen Einblasdüsen 10 eine rotatorische Verwirbelung um die Längsachse des Reaktionstanks 1 herum stattfinden, wobei dieser Teil der Verwirbelung zu Beginn der Reaktion eingesetzt wird. Erst nach Einsetzen der eigentlichen Karbonisierung wird dann die in der Figur 3 gezeigte zweite Komponente zugeschaltet, nämlich das vertikale Einblasen von Dampf über vertikale Einblasdüsen 9. Während zunächst die rotatorische Verwirbelung in einem unteren Verwirbelungsbereich 7 des Reaktionstanks 1 stattgefunden hat, wird aufgrund dieser zusätzlichen, vertikalen Komponente der Verwirbelung eine größere Verteilung der reagierenden Biomasse in dem Reaktionstank 1 bewirkt, so dass auf diese Weise verschiedene energetische Potenziale in dem Behälter realisiert werden können. Durch die mit der vertikalen Verschiebung einhergehenden Dekompression kann die Karbonisierungsreaktion in dem oberen Reaktionsbereich 8 des Reaktors langsamer und gleichmäßiger ablaufen als in dem die Karbonisierungsreaktion initiierenden Verwirbelungsbereich 7, in dem sich die Biomasse nach Eintritt in den Reaktionstank 1 zunächst aufhält. Eine Überlagerung der beiden Verwirbelungskomponenten ist schließlich in der Figur 4 gezeigt.

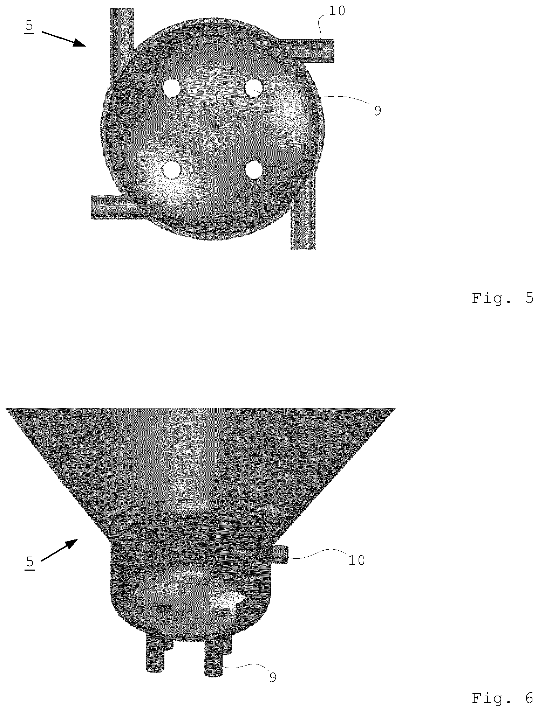

Figur 5 zeigt sodann eine Draufsicht auf die Dampfzuführung 5, welche im Wesentlichen schüsselförmig aufgebaut ist und im vorliegenden Beispiel insgesamt vier tangentiale Einblasdüsen 10 sowie vier vertikale Einblasdüsen 9 aufweist. Die als Venturi-Düsen ausgestalteten tangentialen Einblasdüsen 10 sind so ausgerichtet, dass ihre Einblasrichtung windschief zu einer Längsachse des Reaktionstanks 1 in vier unterschiedliche Richtungen verläuft. Im vorliegenden Beispiel strahlen sämtliche vier tangentialen Einblasdüsen 10 in einer gemeinsamen Ebene, jedoch ist es ohne Weiteres auch möglich, den tangentialen Einblasdüsen eine vertikalen Komponente mitzugeben, um eine bereits in diesem Stadium zumindest leicht nach oben gerichtete Verwirbelung zu erreichen.
Figur 6 zeigt deutlicher die vertikalen Einblasdüsen 9, welche im Wesentlichen parallel zu einer lotrecht stehenden Längsachse des Reaktionstanks 1 ausgerichtet sind. Die vertikalen Einblasdüsen 9 sind im Wesentlichen auf das Zentrum einer Verwirbelung ausgerichtet, welche um die Längsachse des Reaktionstanks 1 aufgrund der Wirkung der tangentialen Einblasdüsen 10 entsteht. Die vertikalen Einblasdüsen 9 werden bevorzugtermaßen erst dann zugeschaltet, wenn die Karbonisierungsreaktion durch die tangentialen Einblasdüsen 10 bereits begonnen hat.
Vorstehend beschrieben ist somit ein Verfahren und ein Reaktionstank zum Durchführen einer hydrothermalen Karbonisierungsreaktion, welche durch das Einblasen von Dampf mithilfe von vertikalen und tangentialen Einblasdüsen eine möglichst gleichmäßige, ideale Verteilung der Biomasse in dem Reaktionsraum und damit ein möglichst gleichmäßiges und ideales Ablaufen der Karbonisierungsreaktion ermöglichen. Insbesondere wird hierdurch ermöglicht, zwei verschiedene energetische Potenziale in einem Reaktionsraum zu realisieren und gleichzeitig die Durchmischung der Biomasse zu verbessern. Im Resultat wird dadurch das Ergebnis der Karbonisierungsreaktion sowohl beschleunigt als auch in der Qualität und Effizienz verbessert.

### BEZUGSZEICHENLISTE

- 1: Reaktionstank
- 2: Vorheiztank
- 3: Biomassenzuführung
- 4: Biomassenpumpe
- 5: Dampfzuführung
- 6: Dampfpumpe
- 7: Verwirbelungsbereich
- 8: Reaktionsbereich
- 9: vertikale Einblasdüse
- 10: tangentiale Einblasdüse

## Patentansprüche

1. Verfahren zur Durchführung einer hydrothermalen Karbonisierungsreaktion, bei welchem einem Reaktionsraum Biomasse zugeführt und durch Einblasen von Dampf die für den Ablauf einer hydrothermalen Karbonisierungsreaktion erforderlichen Reaktionsbedingungen hinsichtlich Druck und Temperatur geschaffen werden,
**dadurch gekennzeichnet, dass** ein Dampfstrahl auf die Biomasse direkt gerichtet und diese in dem Reaktionsraum verwirbelt wird.

2. Verfahren gemäß Anspruch 1, **dadurch gekennzeichnet, dass** der Dampf mittels tangentialer Einblasdüsen (10) eingeblasen wird, deren Einblasrichtung windschief gegenüber einer vorzugsweise lotrecht stehenden Längsachse des Reaktionsraums verläuft.

3. Verfahren gemäß Anspruch 1, **dadurch gekennzeichnet, dass** der Dampf mittels vertikaler Einblasdüsen (9) eingeblasen wird, deren Einblasrichtung parallel zu einer vorzugsweise lotrecht stehenden Längsachse des Reaktionsraums verläuft.

4. Verfahren gemäß Anspruch 1, **dadurch gekennzeichnet, dass** zunächst Dampf mittels tangentialer Einblasdüsen (10) eingeblasen wird, deren Einblasrichtung windschief gegenüber einer vorzugsweise lotrecht stehenden Längsachse des Reaktionsraums verläuft und nach Einsetzen der Karbonisierungsreaktion vertikale Einblasdüsen (9), deren Einblasrichtung parallel zu der Längsachse des Reaktionsraums verläuft, zugeschaltet werden.

5. Verfahren gemäß Anspruch 4, **dadurch gekennzeichnet, dass** die vertikalen Einblasdüsen (9) ausschließlich auf das Zentrum der von den tangentialen Einblasdüsen (10) verursachten Verwirbelung gerichtet sind.

6. Verfahren gemäß einem der vorhergehenden Ansprüche, **dadurch gekennzeichnet, dass** der Dampf mit Überschallgeschwindigkeit, in den Reaktionsraum eingeblasen wird.

7. Verfahren gemäß einem der vorhergehenden Ansprüche, **dadurch gekennzeichnet, dass** Dampf und Biomasse gleichzeitig in den Reaktionsraum eingebracht werden.

8. Verfahren gemäß einem der vorhergehenden Ansprüche, **dadurch gekennzeichnet, dass** die Biomasse vor dem Einbringen in den Reaktionsraum auf zumindest näherungsweise 140°C vorgeheizt wird.

9. Verfahren gemäß einem der vorhergehenden Ansprüche, **dadurch gekennzeichnet, dass** im Rahmen einer Parametrierung der Karbonisierungsreaktion die Vorheiztemperatur der Biomasse, die Einblasgeschwindigkeit des Dampfes, sowie die zeitliche und räumliche Verteilung des Dampfes auf verschiedene Einblasdüsen (9, 10), vorzugsweise über eine Prozesssteuerung, beeinflusst und/oder vorab festgelegt werden können.

10. Reaktionstank einer Anlage zur hydrothermalen Karbonisierung von Biomasse, welcher einen Reaktionsraum mit Mitteln zur Zuführung von Biomasse (3) und Mitteln zur Zuführung von Dampf (5) umschließt, wobei die Mittel zur Zuführung von Dampf (5) wenigstens eine in einem bodennahen Verwirbelungsbereich (7) des Reaktionsraums angeordnete Einblasdüse (9, 10) zur Verwirbelung der Biomasse mithilfe des zuströmenden Dampfes umfassen
**dadurch gekennzeichnet, dass** die Mittel zur Zuführung von Dampf (5) wenigstens eine tangentiale Einblasdüse (10) umfassen, deren Einblasrichtung windschief gegenüber einer vorzugsweise lotrecht stehenden Längsachse des Reaktionsraums verläuft, sowie ferner wenigstens eine vertikale Einblasdüse (9) umfassen, deren Einblasrichtung parallel zu einer vorzugsweise lotrecht stehenden Längsachse des Reaktionsraums verläuft.

11. Reaktionstank gemäß Anspruch 10, **dadurch gekennzeichnet, dass** es sich bei den Einblasdüsen um Venturidüsen handelt.

## Claims

1. A method for carrying out a hydrothermal carbonization reaction, in which biomass is supplied to a reaction chamber and the reaction conditions with respect to pressure and temperature required for the running of a hydrothermal carbonization reaction are provided by injecting steam,
**characterized in that** a steam jet is oriented directly onto the biomass and this biomass is swirled in the reaction chamber.

2. The method according to Claim 1, **characterized in that** the steam is injected by means of tangential injection nozzles (10), the injection direction of which extends skewed in relation to a longitudinal axis of the reaction chamber, which preferably stands vertically.

3. The method according to Claim 1, **characterized in that** the steam is injected by means of vertical injection nozzles (9), the injection direction of which extends parallel to a longitudinal axis of the reaction chamber, which preferably stands vertically.

4. The method according to Claim 1, **characterized in that** firstly steam is injected by means of tangential injection nozzles (10), the injection direction of which extends skewed in relation to a longitudinal axis of the reaction chamber, which preferably stands vertically, and after the carbonization reaction has begun, vertical injection nozzles (9), the injection direction of which extends parallel to the longitudinal axis of the reaction chamber, are switched in.

5. The method according to Claim 4, **characterized in that** the vertical injection nozzles (9) are exclusively oriented onto the center of the swirling caused by the tangential injection nozzles (10).

6. The method according to any one of the preceding claims, **characterized in that** the steam is injected at supersonic speed into the reaction chamber.

7. The method according to any one of the preceding claims, **characterized in that** steam and biomass are introduced simultaneously into the reaction chamber.

8. The method according to any one of the preceding claims, **characterized in that** the biomass is preheated to at least approximately 140°C before the introduction into the reaction chamber.

9. The method according to any one of the preceding claims, **characterized in that**, in the scope of a parameterization of the carbonization reaction, the preceding temperature of the biomass, the injection speed of the steam, and the chronological and spatial distribution of the steam onto various injection nozzles (9, 10) can be influenced and/or established beforehand, preferably via a process controller.

10. A reaction tank of a facility for hydrothermal carbonization of biomass, which encloses a reaction chamber having means for supplying biomass (3) and means for supplying steam (5), wherein the means for supplying steam (5) comprise at least one injection nozzle (9, 10) arranged in a swirling region (7) of the reaction chamber close to the bottom, for swirling the biomass with the aid of the inflowing steam, **characterized in that** the means for supplying steam (5) comprise at least one tangential injection nozzle (10), the injection direction of which extends skewed in relation to a longitudinal axis of the reaction chamber, which preferably stands vertically, and furthermore at least one vertical injection nozzle (9), the injection direction of which extends in parallel to a longitudinal axis of the reaction chamber, which preferably stands vertically.

11. The reaction tank according to Claim 10, **characterized in that** the injection nozzles are Venturi nozzles.

## Revendications

1. Procédé pour la réalisation d'une réaction de carbonisation hydrothermale, dans lequel de la biomasse est amenée dans un espace de réaction et les conditions de pression et de température nécessaires au déroulement de la réaction de carbonisation hydrothermale sont créées par l'injection de vapeur, **caractérisé en ce qu'**un jet de vapeur est orienté directement vers la biomasse et celle-ci est entraînée en tourbillon dans l'espace de réaction.

2. Procédé selon la revendication 1, **caractérisé en ce que** la vapeur est injectée au moyen de buses d'injection tangentielles (10) dont la direction d'injection est oblique par rapport à un axe longitudinal, de préférence vertical, de l'espace de réaction.

3. Procédé selon la revendication 1, **caractérisé en ce que** la vapeur est injectée au moyen de buses d'injection verticales (9) dont la direction d'injection est parallèle à un axe longitudinal, de préférence vertical, de l'espace de réaction.

4. Procédé selon la revendication 1, **caractérisé en ce que** de la vapeur est d'abord injectée au moyen de buses d'injection tangentielles (10) dont la direction d'injection est oblique par rapport à un axe longitudinal, de préférence vertical, de l'espace de réaction, puis, après le démarrage de la réaction de carbonisation, des buses d'injection verticales (9) dont la direction d'injection est parallèle à l'axe longitudinal de l'espace de réaction sont ajoutées.

5. Procédé selon la revendication 4, **caractérisé en ce que** les buses d'injection verticales (9) sont dirigées uniquement vers le centre du tourbillon produit par les buses d'injection tangentielles (10).

6. Procédé selon l'une des revendications précédentes, **caractérisé en ce que** la vapeur est injectée dans l'espace de réaction à une vitesse supersonique.

7. Procédé selon l'une des revendications précédentes, **caractérisé en ce que** la vapeur et la biomasse sont introduites en même temps dans l'espace de réaction.

8. Procédé selon l'une des revendications précédentes, **caractérisé en ce que** la biomasse est préchauffée à environ 140 °C au minimum avant son introduction dans l'espace de réaction.

9. Procédé selon l'une des revendications précédentes, **caractérisé en ce que**, dans le cadre du paramétrage de la réaction de carbonisation, la température de préchauffage de la biomasse, la vitesse d'injection de la vapeur et la distribution de la vapeur dans le temps et dans l'espace entre différentes buses d'injection (9, 10) peuvent être, de préférence, influencées et/ou définies à l'avance à l'aide d'une commande de processus.

10. Cuve de réaction d'une installation de carbonisation hydrothermale de biomasse, qui comprend un espace de réaction avec des moyens pour amener de la biomasse (3) et des moyens pour amener de la vapeur (5), les moyens pour amener de la vapeur (5) comprenant au moins une buse d'injection (9, 10) disposée dans une zone de tourbillon (7) de l'espace de réaction proche du fond pour faire tourbillonner la biomasse à l'aide de la vapeur amenée, **caractérisée en ce que** les moyens pour amener de la vapeur (5) comprennent au moins une buse d'injection tangentielle (10) dont la direction d'injection est oblique par rapport à un axe longitudinal, de préférence vertical, de l'espace de réaction, ainsi qu'au moins une buse d'injection verticale (9) dont la direction d'injection est parallèle à un axe longitudinal, de préférence vertical, de l'espace de réaction.

11. Cuve de réaction selon la revendication 10, **caractérisée en ce que** les buses d'injection sont des buses de Venturi.
